# EUROPÄISCHE PATENTANMELDUNG

(11) **EP 4 704 316 A1**
(43) Veröffentlichungstag der Anmeldung: **04.03.2026**
(21) Anmeldenummer: 24196998.9
(22) Anmeldetag: 28.08.2024
(51) Int. Cl.: H02M 1/00, H02M 3/00, H02M 3/158, H02M 3/28

(54) **STROMVERSORGUNGSSYSTEM UND VERFAHREN ZUM BETRIEB EINES STROMVERSORGUNGSSYSTEMS**

(71) Anmelder: Siemens Aktiengesellschaft, 80333 München (DE)
(72) Erfinder: Portisch, Daniel, 2170 Poysdorf (AT); Böhm, Wolfgang, 3001 Mauerbach (AT)
(74) Vertreter: Siemens Patent Attorneys

(57) **Zusammenfassung**

Ein erfindungsgemäßes Stromversorgungssystem (10) umfasst eine erste Stromversorgungseinheit (11), zumindest eine zweite Stromversorgungseinheit (12) und eine Steuerungs- und/oder Regeleinheit (4), wobei die erste Stromversorgungseinheit (11) und die zumindest eine zweite Stromversorgungseinheit (12) ausgangsseitig in einer Parallelschaltung zusammengeschaltet sind, um gemeinsam eine Last (3) zu speisen. Die erste Stromversorgungseinheit (11) ist dazu eingerichtet, ausgangsseitig eine erste Ausgangsspannung (U1) und einen ersten Ausgangsstrom (11) bereitzustellen und umfasst einen ersten Spannungsregler (31), der die erste Ausgangsspannung (U1) in Bezug auf ein erstes elektrisches Bezugspotenzial (G1) regelt. Die zweite Stromversorgungseinheit (12) ist dazu eingerichtet, ausgangsseitig eine zweite Ausgangsspannung (U2) und einen zweiten Ausgangsstrom (I2) bereitzustellen und umfasst einen zweiten Spannungsregler (32), der die zweite Ausgangsspannung (U2) in Bezug auf ein zweites elektrisches Bezugspotenzial (G2) regelt. Die Steuerungs- und/oder Regeleinheit (4) erzeugt erste Spannungssollwerte (USP1) für den ersten Spannungsregler (31) und zweite Spannungssollwerte (USP2) für den zweiten Spannungsregler (32), wobei die ersten und zweiten Spannungssollwerte (USP1, USP2) jeweils auf das erste elektrische Bezugspotenzial (G1) bezogen sind und wobei das erste elektrische Bezugspotenzial (G1) und das zweite elektrische Bezugspotenzial (G2) unterschiedlich sind. Das Stromversorgungssystem (10) ist dazu eingerichtet, eine durch die unterschiedlichen elektrischen Bezugspotenziale (G1, G2) verursachte Differenz zwischen dem ersten Ausgangsstrom (I1) und dem zweiten Ausgangsstrom (I2) zumindest zu verkleinern, vorzugsweise auf null zu reduzieren.

Hierdurch kann bei hoher konstruktiver Flexibilität ein geringer schaltungs- und regelungstechnischer Aufwand für das Stromversorgungssystem (10) ermöglicht und dabei eine gleiche elektrische Belastung der Stromversorgungseinheiten (11, 12) gewährleistet werden.

## Beschreibung

Die Erfindung betrifft ein Stromversorgungssystem umfassend eine erste Stromversorgungseinheit, zumindest eine zweite Stromversorgungseinheit und eine Steuer- und/oder Regeleinheit gemäß Patentanspruch 1 und ein Verfahren zum Betrieb eines Stromversorgungssystems gemäß Patentanspruch 12.

In der industriellen Automatisierungstechnik (z.B. bei der diskreten Fertigungstechnik oder der Prozesstechnik) oder in der Gebäudeautomatisierung werden in großem Umfang Stromversorgungen für eine Versorgung von elektrischen Lasten, wie z.B. Steuerungen, Sensoren, Pumpen, Ventile, etc., mit elektrischer Energie aus einem Versorgungsnetz eingesetzt.

Die Lasten werden von der Stromversorgung mit einer geeigneten, oft vordefinierten Spannung versorgt. Typischerweise wird dazu ein eingangsseitig hohes Spannungsniveau eines einphasigen oder dreiphasigen Versorgungsnetzes, wie z.B. eine 230V-Wechselspannung, auf ein für die Last vordefiniertes, niedrigeres und üblicherweise konstantes Spannungsniveau (z.B. 24 V oder 48 V Gleichspannung als Nennausgangsspannung) auf einer Ausgangsseite der Stromversorgung umgesetzt.

Derartige Stromversorgungen sind dabei üblicherweise als elektronische Stromversorgungen, insbesondere als getaktete Stromversorgungen bzw. Schaltnetzteile (manchmal auch als Schaltnetzgeräte bezeichnet) ausgebildet und beispielsweise aus der EP 3544166 A1 und der EP 3451476 A1 bekannt. Sie weisen üblicherweise ein Gehäuse auf und können auf eine Hutschiene montiert werden.

Eine solche getaktete Stromversorgung bzw. ein solches Schaltnetzteil umfasst in der Regel eine Eingangsstufe, beispielsweise in Form einer Gleichrichtereinheit, einen Zwischenkreis und einen Schaltwandler, durch welche die Wechselspannung aus dem Versorgungsnetz in eine Gleichspannung für die Energieversorgung der Last umgewandelt wird. Von der Stromversorgung wird die meist unstabilisierte Eingangsspannung dann in eine konstante Ausgangsspannung für die elektrische Last umgesetzt, wobei eine Konstanz der Ausgangsspannung und/oder eines Ausgangsstroms durch eine Regelung des Energieflusses erreicht wird.

Derartige Stromversorgungen bieten manchmal auch die Option, die Ausgänge von zwei Stromversorgungen parallel zu schalten. Hierdurch können höhere Ausgangsleistungen bereitgestellt werden. Bei einer derartigen Parallelschaltung ist allerdings darauf zu achten, dass die parallel geschalteten Stromversorgungen mit annähernd gleichem Laststrom betrieben werden, die Lastströme also "symmetriert" werden. Bei fehlender Symmetrierung besteht das Risiko, dass eine der Stromversorgungen immer mit sehr hoher Last oder Volllast betrieben wird, was deutlich höhere Betriebstemperatur und erhöhte Bauteilbelastung zur Folge hat und somit zu verkürzter Lebensdauer und verfrühtem Ausfall führen kann.

Um eine jeweils gleiche Belastung der parallel geschalteten Stromversorgungen und damit gleiches Alterungsverhalten zu gewährleisten, ist es bekannt, die Stromversorgungen für den Parallelbetrieb in einem Betriebsmodus mit "geneigten" Ausgangskennlinien zu betreiben. In diesem Betriebsmodus wird die Spannung an den Ausgangsklemmen der Stromversorgung in linearer Abhängigkeit des Laststroms geringfügig reduziert. Je höher der Laststrom ist, desto stärker wird die Ausgangsspannung reduziert. Im Leerlauf ohne Last erfolgt keine Reduktion der Ausgangsspannung, bei Nennlast wird die Spannung um 1.2V bei 24V Geräten und um 2V bei 48V Geräten reduziert. Durch die lastabhängige Absenkung der Ausgangsspannung werden die Lastströme der parallel geschalteten Stromversorgungen symmetriert, allerdings hat der Nutzer den Nachteil einer nicht konstanten Versorgungspannung an seiner Last.

Die EP 2 009 777 A2 beschäftigt sich mit dem Problem der Erzeugung asymmetrischer Ströme in parallel geschalteten Leistungsteilen aufgrund von Toleranzen und Temperaturdriften in den Leistungsteilen. Zur Lösung dieses Problems offenbart die EP 2 009 777 A2 eine Stromversorgung, welche einen ersten Leistungsteil und einen Kontroller zur Regelung einer Ausgangsspannung und/oder eines Ausgangsstromes in Abhängigkeit einer ausgangsseitig angeschlossenen Last und einer eingangsseitig anliegenden Eingangsspannung umfasst, wobei ein zweiter Leistungsteil mit dem ersten Leistungsteil eine Parallelschaltung bildet, sodass sich ein Gesamtausgangsstrom der Stromversorgung aus einem ersten Ausgangsstrom des ersten Leistungsteils und einem zweiten Ausgangsstrom des zweiten Leistungsteils zusammensetzt. Dabei ist ein Hauptkontroller zur Erzeugung eines ersten pulsweitenmodulierten Signals zur Ansteuerung des ersten Leistungsteils vorgesehen. Des Weiteren ist ein Subkontroller vorgesehen, welchem das erste pulsweitenmodulierte Signal und ein der Differenz zwischen erstem und zweitem Ausgangsstrom proportionales Differenzsignal zugeführt sind und an dessen Ausgang ein zweites pulsweitenmoduliertes Signal zur Ansteuerung des zweiten Leistungsteils abgreifbar ist. Hierdurch wird eine laufende Angleichung des ersten und zweiten Ausgangsstromes ermöglicht.

Ausgehend hiervon ist es Aufgabe vorliegender Erfindung, ein Stromversorgungssystem mit zumindest zwei ausgangsseitig parallel geschalteten Stromversorgungseinheiten sowie ein Verfahren zum Betrieb eines derartigen Stromversorgungssystems anzugeben, welches bei hoher konstruktiver Flexibilität einen geringen schaltungs- und regelungstechnischen Aufwand für das Stromversorgungssystem ermöglicht und dabei eine gleiche Belastung der Stromversorgungseinheiten sicherstellt.

Die Lösung dieser Aufgabe gelingt durch ein Stromversorgungssystem gemäß Patentanspruch 1 und durch ein Verfahren zum Betrieb eines Stromversorgungssystems gemäß Patentanspruch 12. Vorteilhafte Ausgestaltungen sind jeweils Gegenstand der Unteransprüche.

Das erfindungsgemäße Stromversorgungssystem umfasst eine erste Stromversorgungseinheit, zumindest eine zweite Stromversorgungseinheit und eine Steuer- und/oder Regeleinheit, wobei die erste Stromversorgungseinheit und die zumindest eine zweite Stromversorgungseinheit ausgangsseitig in einer Parallelschaltung zusammengeschaltet sind (z.B. an eine gemeinsame ausgangsseitige Anschlussklemme angeschlossen sind), um gemeinsam eine Last zu speisen. Die erste Stromversorgungseinheit ist hierbei dazu eingerichtet, ausgangsseitig eine erste Ausgangsspannung und einen ersten Ausgangsstrom bereitzustellen und umfasst einen ersten Spannungsregler, der die erste Ausgangsspannung in Bezug auf ein erstes elektrisches Bezugspotenzial regelt. Die zweite Stromversorgungseinheit ist dazu eingerichtet, ausgangsseitig eine zweite Ausgangsspannung und einen zweiten Ausgangsstrom bereitzustellen und umfasst einen zweiten Spannungsregler, der die zweite Ausgangsspannung in Bezug auf ein zweites elektrisches Bezugspotenzial regelt. Die Steuer- und/oder Regeleinheit erzeugt erste Spannungssollwerte für den ersten Spannungsregler und zweite Spannungssollwerte für den zweiten Spannungsregler, wobei die ersten und zweiten Spannungssollwerte jeweils auf das erste elektrische Bezugspotenzial bezogen sind, und wobei das erste elektrische Bezugspotenzial und das zweite elektrische Bezugspotenzial unterschiedlich sind.

Bei dem erfindungsgemäßen Stromversorgungssystem kommen somit Stromversorgungseinheiten mit unterschiedlichen Bezugspotenzialen zum Einsatz. Hierdurch entsteht eine hohe konstruktive Flexibilität das Stromversorgungssystem, wodurch ein geringer Platzbedarf realisiert werden kann. Beispielsweise können die Stromversorgungseinheiten über elektrische Verbindungen (z.B. Verbindungsplatinen mit Kupferbahnen, Schraubverbindungen, Lötverbindungen) mit nicht vernachlässigbarem elektrischem Widerstand miteinander verbunden werden, die dann aufgrund Masseverschiebungen unterschiedliche elektrische Bezugspotenziale der Stromversorgungseinheiten bewirken.

Jede der Stromversorgungseinheiten umfasst dabei einen jeweils eigenen (d.h. lokalen) Spannungsregler. Im Vergleich zu einem einzigen gemeinsamen übergeordneten Spannungsregler müssen somit weniger Regelsignale zu den Stromversorgungseinheiten übertragen werden, wodurch der schaltungs- und regelungstechnische Aufwand und somit auch Platzbedarf des Stromversorgungssystems klein gehalten werden kann. Für die Ermittlung und Vorgabe der Spannungssollwerte sind dagegen nur wenige Steuer- oder Regelsignale notwendig. Deshalb ist zur Platzeinsparung nur eine einzige gemeinsame übergeordnete Steuer- und/oder Regeleinheit vorhanden. Die Spannungsregler können hierdurch auch auf der jeweiligen Masse des Leistungsteiles der jeweiligen Stromversorgungseinheit belassen werden, wodurch sich Vorteile in Bezug auf EMV und Überspannungsschutz ergeben.

Wie sich jedoch herausgestellt hat, können die unterschiedlichen Bezugspotenziale zu einer Asymmetrie zwischen dem ersten und dem zweiten Ausgangsstrom führen, wenn sich die Spannungssollwerte nur auf eines der beiden Bezugspotenziale beziehen. Zum Beispiel kann es zu Schwingungen der Ausgangsspannungen der Stromversorgungseinheiten kommen, die dann die Asymmetrie der Ausgangsströme bewirken. Erfindungsgemäß ist das Stromversorgungssystem deshalb dazu eingerichtet, eine durch die unterschiedlichen elektrischen Bezugspotenziale verursachte Differenz zwischen dem ersten Ausgangsstrom und dem zweiten Ausgangsstrom, d.h. eine Asymmetrie der beiden Ausgangsströme, zumindest zu verkleinern, vorzugsweise auf null zu reduzieren.

Bei der Last kann es sich um eine einzige Last handeln. Die Last kann sich aber auch aus mehreren Teillasten zusammensetzen, die beispielsweise über einen Energiebus in einer Parallelschaltung an das Stromversorgungssystem angeschlossen sind.

Das Stromversorgungssystem kann nur eine einzige zweite Stromversorgungseinheit oder auch mehrere zweite Stromversorgungseinheiten umfassen. Wenn das Stromversorgungssystem mehrere zweite Stromversorgungseinheiten umfasst, ist es vorzugsweise eingerichtet, eine durch die unterschiedlichen elektrischen Bezugspotenziale verursachte Differenz zwischen dem ersten Ausgangsstrom und dem zweiten Ausgangsstrom jeder der zweiten Stromversorgungseinheiten zumindest zu verkleinern, vorzugsweise auf null zu reduzieren.

Gemäß einer vorteilhaften Ausgestaltung ist das Stromversorgungssystem derart eingerichtet, dass die Verkleinerung der Differenz, vorzugsweise Reduzierung auf null, durch eine Korrektur bei der Regelung der zweiten Ausgangsspannung durch den zweiten Spannungsregler erfolgt. Hierdurch können asymmetrische Ströme kompensiert werden, die dadurch entstehen, dass der zweite Spannungsregler auf das zweite Bezugspotenzial regelt, sich aber der von der Steuer- und/oder Regeleinheit erhaltene zweite Spannungssollwert auf das erste Bezugspotenzial bezieht. Die Korrektur kann dann sehr schnell (z.B. im Bereich von Mikrosekunden) vor Ort in der zweiten Stromversorgungseinheit erfolgen, um schnell und effektiv Schwingungen der Ausgangsspannung zu vermeiden.

Gemäß einer besonders vorteilhaften Ausgestaltung des Stromversorgungssystems ist es derart eingerichtet, dass der zweite Spannungsregler die zweite Ausgangsspannung in Abhängigkeit von den zweiten Spannungssollwerten und von korrigierten Istwerten der zweiten Ausgangsspannung regelt. Die Verkleinerung der Differenz zwischen dem ersten Ausgangsstrom und dem zweiten Ausgangsstrom, vorzugsweise Reduzierung der Differenz auf null, erfolgt hier somit über eine Korrektur der Istwerte der zweiten Ausgangsspannung.

Alternativ kann das Stromversorgungssystems auch derart eingerichtet sein, dass der zweite Spannungsregler die zweite Ausgangsspannung in Abhängigkeit von korrigierten zweiten Spannungssollwerten und von (unkorrigierten) Istwerten der zweiten Ausgangsspannung regelt. Die Verkleinerung der Differenz zwischen dem ersten Ausgangsstrom und dem zweiten Ausgangsstrom, vorzugsweise Reduzierung der Differenz auf null, erfolgt hier somit über eine Korrektur der von der Steuer- und/oder Regeleinheit bereitgestellten zweiten Spannungssollwerte.

Es ist auch denkbar, dass das Stromversorgungssystems derart eingerichtet ist, dass der zweite Spannungsregler die zweite Ausgangsspannung sowohl in Abhängigkeit von korrigierten zweiten Spannungssollwerten als auch von korrigierten Istwerten der zweiten Ausgangsspannung regelt.

Wenn eine Differenz zwischen den Bezugspotenzialen abhängig ist von einer Höhe des zweiten Ausgangsstroms, dann kann die Korrektur der Istwerte der zweiten Ausgangsspannung bzw. der zweiten Spannungssollwerte derart erfolgen, dass sich die zweite Ausgangspannung mit steigendem zweiten Ausgangsstrom reduziert bzw. mit sich reduzierendem Ausgangsstrom ansteigt. Eine Abhängigkeit der Differenz zwischen den Bezugspotenzialen von einer Höhe des zweiten Ausgangsstroms kann sich beispielsweise dadurch ergeben, dass eine Ausgangsklemme für die Last auf dem ersten Bezugspotenzial der ersten Stromversorgungseinheit liegt und die zweite Stromversorgungseinheit ausgangsseitig über eine verlustbehaftete elektrische Verbindung mit der Ausgangsklemme verbunden ist. Das zweite Bezugspotenzial ist dann kleiner als das erste Bezugspotenzial. Aus Sicht des zweiten Spannungsreglers addiert sich diese Potenzialdifferenz zu den zweiten Spannungssollwerten hinzu und dieser würde auf eine höhere zweite Ausgangsspannung regeln. Da beide Stromversorgungseinheiten ausgangsseitig parallelgeschaltet sind, würde die Ausgangsspannung des Stromversorgungssystems steigen.

Dadurch regelt der erste Spannungsregler die erste Ausgangsspannung zurück. Wenn die Steuer- und/oder Regeleinheit nicht schnell genug ist, dies auszugleichen, dann regelt nun auch der zweite Spannungsregler die zweite Ausgangsspannung zurück, woraufhin der erste Spannungsregler die erste Ausgangsspannung wieder hochregelt. Beide Spannungsregler schwingen somit um 180° phasenverschoben. Durch die Korrektur der zweiten Spannungssollwerte entsteht aus der Mitkopplung eine Gegenkopplung, die nicht schwingen kann.

Gemäß einer besonders einfach realisierbaren Ausgestaltung folgt eine Änderung (z.B. Reduzierung) der zweiten Ausgangsspannung in Abhängigkeit von dem zweiten Ausgangsstrom einer (leicht) geneigten linearen Kennlinie, d.h. die zweite Ausgangsspannung wird in negativ linearer Abhängigkeit von dem zweiten Ausgangsstrom geändert (z.B. reduziert)

Vorzugsweise ist die Korrektur der Istwerte der zweiten Ausgangsspannung bzw. der zweiten Spannungssollwerte zumindest so groß ist wie eine Differenz zwischen den Bezugspotenzialen. Wenn die Differenz zwischen den Bezugspotenzialen beispielsweise abhängig ist von einer Höhe des durch den zweiten Ausgangsstroms an einer elektrischen Verbindung zwischen den Stromversorgungseinheiten erzeugten Spannungsabfalls, dann ist die Änderung zumindest so groß wie dieser Spannungsabfall.

Alternativ oder übergreifend zu der Korrektur bei der Regelung der zweiten Ausgangsspannung durch den zweiten Spannungsregler kann das Stromversorgungssystem auch dazu eingerichtet sein,
- die erste Ausgangsspannung unabhängig von dem ersten Ausgangsstrom auf die ersten Spannungssollwerte für die erste Ausgangsspannung zu regeln, und
- die zweite Ausgangsspannung durch eine Änderung der zweiten Spannungssollwerte für die zweite Ausgangsspannung derart zu regeln, dass sich die Differenz zwischen dem ersten Ausgangsstrom und dem zweiten Ausgangsstrom zumindest verkleinert, vorzugsweise auf null reduziert.

Die erste Ausgangsspannung wird somit unabhängig von dem ersten Ausgangsstrom auf einen vorgegebenen oder vorgebbaren Wert (z.B. eine Nennspannung des Stromversorgungssystems) geregelt und mittels der zweiten Ausgangsspannung werden etwaige Differenzen zwischen den Ausgangsströmen verkleinert, vorzugsweise auf null zu reduziert. Die Ausgangsströme werden somit über eine Regelung der zweiten Ausgangsspannung aneinander angeglichen, vorzugsweise auf eine gleiche Größe gebracht. Mit anderen Worten kommt es zu einer Ausregelung einer Differenz zwischen dem ersten Ausgangsstrom und dem zweiten Ausgangsstrom mit Hilfe der zweiten Ausgangsspannung. Die Ausgangsströme können hierbei der Steuer- und/oder Regeleinheit zugeführt werden, die dann die zweiten Spannungssollwerte in kleinen Schritten verändert, so dass eine eventuelle Differenz der Ausgangsströme verkleinert, vorzugsweise auf null reduziert wird. Wie sich herausgestellt hat, kann hierdurch eine sehr gute Symmetrie des ersten und zweiten Ausgangsstromes erreicht und dabei sichergestellt werden, dass für eine Last immer die vorgegebene oder vorgebbare (konstante) Versorgungsspannung bereitgestellt wird.

Wenn die Steuer- und/oder Regeleinheit langsamere Reaktionszeiten bei der Steuerung- und/oder Regelung wie der zweite Spannungsregler hat, dann kann diese Ausgestaltung zeitlich überlagert zu den vorstehend erläuterten Regelungskorrekturen durch den zweiten Spannungsregler erfolgen.

Wenn die Steuer- und/oder Regeleinheit in etwa gleich schnelle oder schnellere Reaktionszeiten bei der Steuerung- und/oder Regelung wie der zweite Spannungsregler hat, dann kann diese Ausgestaltung auch eine Alternative sein zu der vorstehend beschriebenen Regelungskorrektur durch den zweiten Spannungsregler.

Gemäß einer weiteren Ausgestaltung des Stromversorgungssystems umfasst dieses zumindest eine erste und eine zweite Anschlussklemme zum Anschluss der Last, wobei die erste Stromversorgungseinheit und die zweite Stromversorgungseinheit ausgangsseitig in einer Parallelschaltung an die beiden Anschlussklemmen angeschlossen sind, um gemeinsam die Last zu speisen, und wobei die zweite Anschlussklemme das erste Bezugspotenzial hat. Durch die unterschiedlichen Bezugspotenziale zwischen der Anschlussklemme und der zweiten Stromversorgungseinheit können asymmetrische Ausgangsströme der ersten und der zweiten Stromversorgungseinheit entstehen, die mit der Erfindung wirksam reduziert werden können.

Gemäß einer weiteren vorteilhaften Ausgestaltung sind elektrische Verbindungen von den beiden Anschlussklemmen zu der ersten Stromversorgungseinheit kürzer als elektrische Verbindungen von den beiden Anschlussklemmen zu der zweiten Stromversorgungseinheit. Durch die unterschiedlichen Leitungslängen und somit unterschiedlichen elektrischen Widerstände erzeugte unterschiedliche Bezugspotenziale der beiden Stromversorgungseinheiten können asymmetrische Ausgangsströme der beiden Stromversorgungseinheiten entstehen, die mit der Erfindung wirksam reduziert werden können.

Gemäß einer konstruktiv einfachen und platzsparenden Ausgestaltung sind die erste und die zweite Anschlussklemme an die erste Stromversorgungseinheit angeschlossen.

Bevorzugt ist die Steuer- und/oder Regeleinheit ein Bestandteil der ersten Stromversorgungseinheit. Hierdurch kann ebenfalls der Platzbedarf reduziert werden.

Gemäß einer weiteren platzsparenden Ausgestaltung weist das Stromversorgungssystem ein gemeinsames Gehäuse für die beiden Stromversorgungseinheiten auf.

Eine störfeste Übertragung der Spannungssollwerte von der Steuer- und/oder Regeleinheit an die Spannungsregler ist dadurch möglich, dass die Steuer- und/oder Regeleinheit ausgebildet ist, die Spannungssollwerte jeweils in Form eines pulsbreitenmodulierten Signales bereitzustellen, dessen Tastgrad eine Information über den Wert des jeweiligen Spannungssollwertes enthält.

Bei dem erfindungsgemäßen Verfahren zum Betrieb eines Stromversorgungssystems umfassend eine erste Stromversorgungseinheit, zumindest eine zweite Stromversorgungseinheit und eine Steuer- und/oder Regeleinheit, sind die erste Stromversorgungseinheit und die zumindest eine zweite Stromversorgungseinheit ausgangsseitig in einer Parallelschaltung zusammengeschaltet, um gemeinsam eine Last zu speisen. Die erste Stromversorgungseinheit stellt ausgangsseitig eine erste Ausgangsspannung und einen ersten Ausgangsstrom bereit und umfasst einen ersten Spannungsregler, der die erste Ausgangsspannung in Bezug auf ein erstes elektrisches Bezugspotenzial regelt. Die zweite Stromversorgungseinheit stellt ausgangsseitig eine zweite Ausgangsspannung und einen zweiten Ausgangsstrom bereit und umfasst einen zweiten Spannungsregler, der die zweite Ausgangsspannung in Bezug auf ein zweites elektrisches Bezugspotenzial regelt. Die Steuer- und/oder Regeleinheit erzeugt erste Spannungssollwerte für den ersten Spannungsregler und zweite Spannungssollwerte für den zweiten Spannungsregler, wobei die ersten und zweiten Spannungssollwerte jeweils auf das erste elektrische Bezugspotenzial bezogen sind und wobei das erste elektrische Bezugspotenzial und das zweite elektrische Bezugspotenzial unterschiedlich sind. Eine durch die unterschiedlichen elektrischen Bezugspotenziale verursachte Differenz zwischen dem ersten Ausgangsstrom und dem zweiten Ausgangsstrom wird dabei zumindest verkleinert, vorzugsweise auf null reduziert.

Die Verkleinerung der Differenz erfolgt vorzugsweise durch eine Korrektur bei der Regelung der zweiten Ausgangsspannung durch den zweiten Spannungsregler.

Gemäß einer vorteilhaften Ausgestaltung regelt der zweite Spannungsregler hierzu die zweite Ausgangsspannung in Abhängigkeit von den zweiten Spannungssollwerten und von korrigierten Istwerten der zweiten Ausgangsspannung.

Gemäß einer vorteilhaften alternativen Ausgestaltung regelt der zweite Spannungsregler hierzu die zweite Ausgangsspannung in Abhängigkeit von korrigierten zweiten Spannungssollwerten und von (unkorrigierten) Istwerten der zweiten Ausgangsspannung.

Es ist auch denkbar, dass der zweite Spannungsregler die zweite Ausgangsspannung sowohl in Abhängigkeit von korrigierten zweiten Spannungssollwerten als auch von korrigierten Istwerten der zweiten Ausgangsspannung regelt.

Wenn eine Differenz zwischen den Bezugspotenzialen abhängig ist von einer Höhe des zweiten Ausgangsstroms, dann erfolgt die Korrektur der Istwerte der zweiten Ausgangsspannung bzw. der zweiten Spannungssollwerte vorzugsweise derart, dass sich die zweite Ausgangspannung mit steigendem zweiten Ausgangsstrom reduziert bzw. mit sich reduzierendem Ausgangsstrom ansteigt.

Eine Änderung der zweiten Ausgangsspannung in Abhängigkeit von dem zweiten Ausgangsstrom folgt dabei von Vorteil einer geneigten linearen Kennlinie.

Eine Korrektur der Istwerte der zweiten Ausgangsspannung bzw. der zweiten Spannungssollwerte ist vorzugsweise zumindest so groß ist wie eine Differenz zwischen den Bezugspotenzialen.

Eine weitere vorteilhafte Ausgestaltung des erfindungsgemäßen Verfahrens sieht vor, dass
- die erste Ausgangsspannung unabhängig von dem ersten Ausgangsstrom auf die ersten Spannungssollwerte für die erste Ausgangsspannung geregelt wird, und
- die zweite Ausgangsspannung durch eine Änderung der zweiten Spannungssollwerte für die zweite Ausgangsspannung derart geregelt wird, dass sich die Differenz zwischen dem ersten Ausgangsstrom und dem zweiten Ausgangsstrom zumindest verkleinert, vorzugsweise auf null reduziert.

Die Spannungssollwerte werden dabei vorzugsweise jeweils in Form eines pulsbreitenmodulierten Signales (PWM) bereitgestellt, dessen Tastgrad eine Information über den Wert des jeweiligen Spannungssollwertes enthält.

Die für das erfindungsgemäße Stromversorgungssystem und seine vorteilhaften Ausgestaltungen genannten Wirkungen und Vorteile gelten entsprechend für das erfindungsgemäße Verfahren und dessen vorteilhafte Ausgestaltungen.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Es zeigen:
- FIG 1: ein erstes Ausführungsbeispiel eines erfindungsgemäßen Stromversorgungssystems,
- FIG 2: ein zweites Ausführungsbeispiel eines erfindungsgemäßen Stromversorgungssystems.
- FIG 3: ein drittes Ausführungsbeispiel eines erfindungsgemäßen Stromversorgungssystems,
- FIG 4: einen beispielhaften konstruktiven Aufbau eines erfindungsgemäßen Stromversorgungssystems.

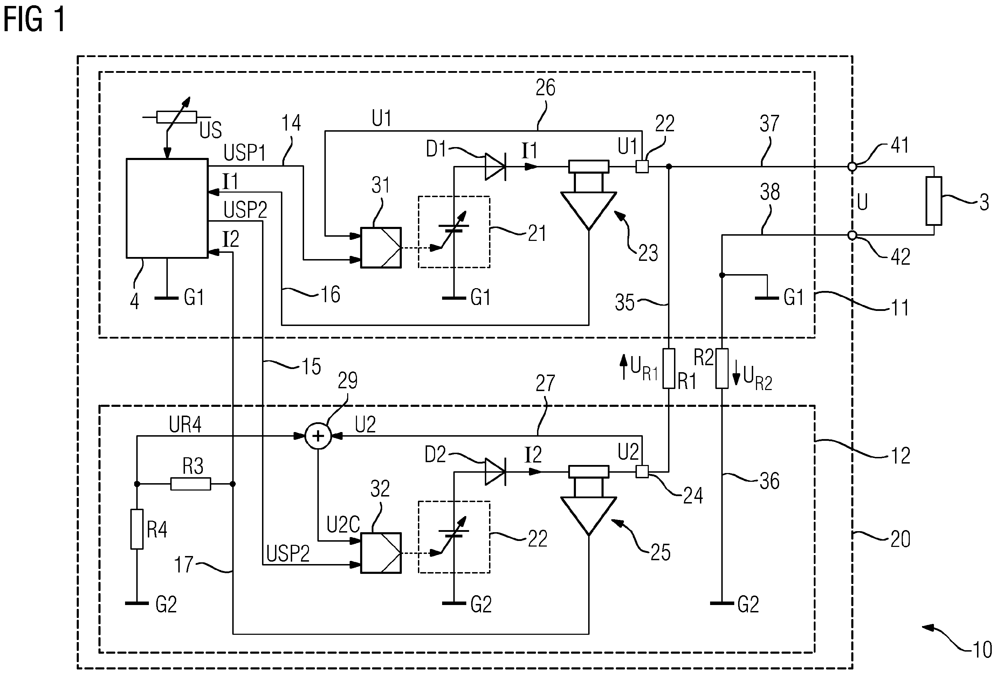

Ein in FIG 1 in prinzipieller und vereinfachter Darstellung gezeigtes erfindungsgemäßes Stromversorgungssystem 10 umfasst zwei Stromversorgungseinheiten 11, 12, die jeweils als getaktete Stromversorgung bzw. als Schaltnetzteil (Schaltnetzgerät) ausgebildet sind.

Das Stromversorgungssystem 10 weist ein gemeinsames Gehäuse 20 für die beiden Stromversorgungseinheiten auf und ist ausgebildet, auf einer Hutschiene befestigt zu werden. Somit kann es besonders einfach in Schaltschränken installiert werden.

Die erste Stromversorgungseinheit 11 ist dazu eingerichtet, ausgangsseitig eine erste Ausgangsspannung U1 und einen ersten Ausgangsstrom 11 bereitzustellen. Die zweite Stromversorgungseinheit 12 ist dazu eingerichtet, ausgangsseitig eine zweite Ausgangsspannung U2 und einen zweiten Ausgangsstrom I2 bereitzustellen.

Jede der Stromversorgungseinheiten 11, 12 umfasst einen Leistungsteil 21 bzw. 22, der ausgangsseitig die jeweilige Ausgangsspannung U1 bzw. U2 und den jeweiligen Ausgangsstrom I1 bzw. I2 bereitstellt, sowie einen Spannungsregler 31 bzw. 32 zur Regelung der Ausgangsspannung U1 bzw. U2 des jeweiligen Leistungsteils 21 bzw. 22. Daneben kann auch noch jeweils ein Stromregler zur Regelung des Ausgangsstromes I1 bzw. I2 des jeweiligen Leistungsteils 21 bzw. 22 vorhanden sein.

Der Leistungsteil 21 bzw. 22 besteht im Wesentlichen aus einem Wandler, wobei unterschiedliche Ausprägungen wie zum Beispiel Sperrwandler, Flusswandler, Gegentaktwandler, Aufwärtswandler, Abwärtswandler, Resonanzwandler, etc. bekannt sind. Abhängig von der eingangsseitig und ausgangsseitig auftretenden Stromform unterscheidet man des Weiteren zum Beispiel Gleichstrom-Gleichstrom-Wandler (DCDC-Wandler), Wechselstrom-Gleichstrom-Wandler (AC-DC-Wandler) oder Gleichstrom-Wechselstrom-Wandler (DC-AC-Wandler).

Die erste Stromversorgungseinheit 11 und die zweite Stromversorgungseinheit 12 sind ausgangsseitig in einer Parallelschaltung zusammengeschaltet, um gemeinsam eine Last 3 zu speisen.

Bei der Last 3 kann es sich beispielsweise um eine Gleichspannungslast handeln. Die Leistungsteile 21, 22 können eingangsseitig in nicht näher dargestellter Weise beispielsweise aus einem Versorgungsnetz in Form eines Wechselspannungsnetzes versorgt werden und somit ein AC-DC-Wandler zum Einsatz kommen. Der AC-DC-Wandler umfasst beispielsweise eine Gleichrichtereinheit, einen Zwischenkreis und einen Schaltwandler. Durch eine Regelung des Energieflusses durch den Wandler wird die meist unstabilisierte Eingangsspannung des Wechselspannungsnetzes in eine geregelte Ausgangsspannung U (z.B. eine Gleichspannung von 28 V oder 48 V) zur Versorgung der Last 3 umgewandelt.

Das Stromversorgungssystem 10 weist Anschlussklemmen 41, 42 zum Anschluss der Last 3 auf und die erste Stromversorgungseinheit 11 und die zweite Stromversorgungseinheit 12 sind ausgangsseitig in einer Parallelschaltung an die beiden Anschlussklemmen angeschlossen.

Das Stromversorgungssystem 10 umfasst weiterhin eine Steuer- und/oder Regeleinheit 4, die erste Spannungssollwerte USP1 für den ersten Spannungsregler 31 und zweite Spannungssollwerte USP2 für den zweiten Spannungsregler 32 erzeugt, die über Signalleitungen 14 bzw. 15 an die Spannungsregler 31, 32 übertragen werden. Die Steuer- und/oder Regeleinheit 4 ist beispielsweise als ein Mikrocontroller ausgebildet.

Die Übertragung der Spannungssollwerte USP1, USP2 von der Steuer- und/oder Regeleinheit 4 über die Leitungen 14, 15 zu den Spannungsreglern 31, 32 erfolgt in nicht näher dargestellter Weise vorzugsweise jeweils in Form eines pulsbreitenmodulierten (PWM) Signales, dessen Tastgrad eine Information über den Wert des jeweiligen Spannungssollwertes enthält.

Jede der Stromversorgungseinheiten 11, 12 weist eine Diode D1 bzw. D2 zur ausgangsseitigen Entkopplung der Stromversorgungseinheiten 11, 12 auf.

Die Stromversorgungseinheit 11 weist eine Spannungsmesseinrichtung 22 zur Messung von Istwerten der ersten Ausgangsspannung U1 auf, die über eine Signalleitung 26 zu dem ersten Spannungsregler 31 übertragen bzw. diesem zugeführt werden.

Die Stromversorgungseinheit 11 weist weiterhin eine Strommesseinrichtung 23 zur Messung von Istwerten des ersten Ausgangsstromes 11 auf, die über eine Signalleitung 16 zu der Steuer- und/oder Regeleinheit 4 übertragen bzw. dieser zugeführt werden.

In entsprechender Weise weist die Stromversorgungseinheit 12 eine Spannungsmesseinrichtung 24 zur Messung von Istwerten der zweiten Ausgangsspannung U2 auf, die über eine Signalleitung 27 und einem Addierglied 29 zu dem zweiten Spannungsregler 32 übertragen bzw. diesem zugeführt werden.

Die Stromversorgungseinheit 12 weist ebenfalls eine Strommesseinrichtung 25 zur Messung von Istwerten des zweiten Ausgangsstromes I2 auf, die über eine Signalleitung 17 zu der Steuer- und/oder Regeleinheit 4 übertragen bzw. dieser zugeführt werden.

Jede der Strommesseinrichtungen 23, 25 umfasst in bekannter Weise einen von dem ersten bzw. zweiten Ausgangsstrom I1, I2 durchflossenen Messwiderstand und einen Messverstärker zum Verstärken einer an dem Messwiderstand abgegriffenen Messspannung.

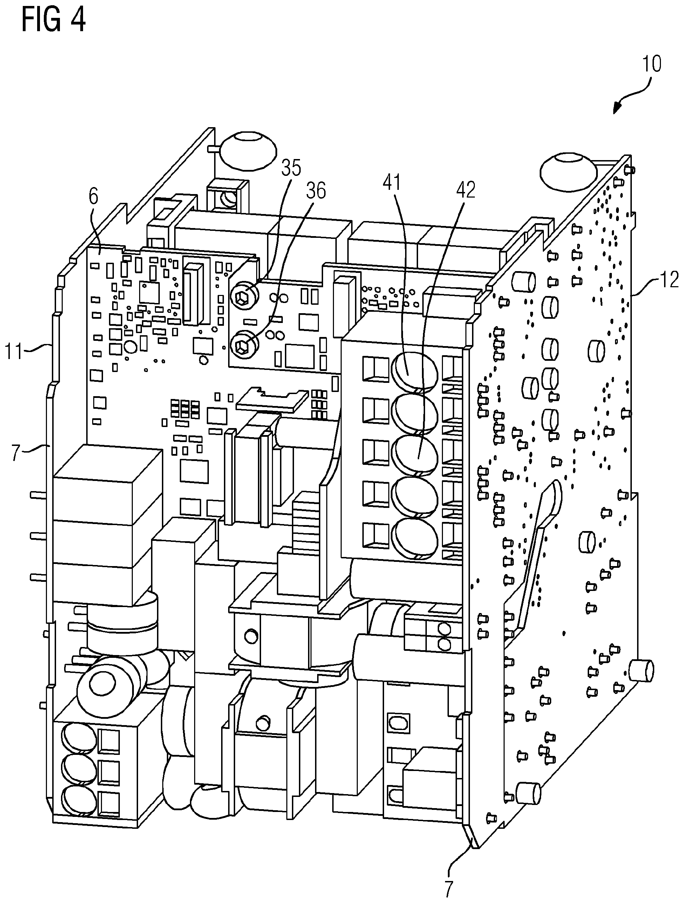

Die beiden Stromversorgungseinheiten 11, 12 sind über elektrische Verbindungen (z.B. Verbindungsplatinen mit Kupferbahnen, Schraubverbindungen, Lötverbindungen) mit nicht vernachlässigbarem elektrischem Widerstand miteinander verbunden (siehe z.B. Verbindungsplatine 6 in FIG 4). Da die beiden Anschlussklemmen 41, 42 an der ersten Stromversorgungseinheit 11 angeschlossen sind, sind auch die elektrischen Verbindungen 37, 38 von den beiden Anschlussklemmen 41, 42 zu der ersten Stromversorgungseinheit 11 kürzer als die elektrischen Verbindungen 35, 36 von den beiden Anschlussklemmen 41, 42 zu der zweiten Stromversorgungseinheit 12. Insgesamt ergeben sich hierdurch nicht vernachlässigbare elektrische Übergangswiderstände R1 bzw. R2 in den elektrischen Verbindungen 35 bzw. 36 zu der zweiten Stromversorgungseinheit 12. An diesen Übergangswiderständen R1, R2 entstehen Spannungsabfälle U_{R1} bzw. U_{R2}, die proportional zu dem zweiten Strom I2 sind. U_{R2} bewirkt zudem eine Masseverschiebung, die dazu führt, dass das Potenzial G1 der Masse der Stromversorgungseinheit 11 unterschiedlich ist zu dem Potenzial G2 der Masse der Stromversorgungseinheit 12.

Die Komponenten der ersten Stromversorgungseinheit 11 sind mit der Masse bzw. dem Potenzial G1 in elektrischer Verbindung (z.B. Leistungsteil 21, Steuer- und/oder Regeleinheit 4) und steuern bzw. regeln in Bezug auf dieses Potenzial G1 (z.B. Spannungsregler 31, Steuer- und/oder Regeleinheit 4). Auch die Ausgangsklemme 42 ist mit der Masse bzw. dem Potenzial G1 der ersten Stromversorgungseinheit 11 verbunden.

Umgekehrt sind die Komponenten der zweiten Stromversorgungseinheit 12 mit der Masse bzw. dem Potenzial G2 in elektrischer Verbindung (z.B. Leistungsteil 22, elektrische Verbindung 28 zur Stromversorgungseinheit 11) und steuern bzw. regeln in Bezug auf dieses Potenzial G2 (z.B. Spannungsregler 32).

Der erster Spannungsregler 31 regelt somit die erste Ausgangsspannung U1 in Bezug auf das erste elektrisches Bezugspotenzial G1 und der zweite Spannungsregler 32 regelt die zweite Ausgangsspannung U2 in Bezug auf das hierzu unterschiedliche zweite elektrische Bezugspotenzial G2.

Da die Steuer- und/oder Regeleinheit 4 ein Bestandteil der ersten Stromversorgungseinheit 11 ist, erzeugt sie die ersten Spannungssollwerte USP1 für den ersten Spannungsregler 31 und die zweiten Spannungssollwerte USP2 für den zweiten Spannungsregler 32 jeweils mit Bezug auf das erste elektrische Bezugspotenzial G1.

Aus Sicht des zweiten Spannungsreglers 32 addiert sich die an dem Übergangswiderstand R2 abfallende Spannung U_{R2} zu den zweiten Spannungssollwerten USP2 hinzu und dieser würde auf eine höhere zweite Ausgangsspannung U2 regeln. Da beide Stromversorgungseinheiten 11,12 ausgangsseitig parallelgeschaltet sind, würde die Ausgangsspannung U des Stromversorgungssystems 10 steigen. Dadurch regelt der erste Spannungsregler 31 die erste Ausgangsspannung U1 zurück. Wenn die Steuer- und/oder Regeleinheit 4 nicht schnell genug ist, dies auszugleichen, dann regelt nun auch der zweite Spannungsregler 32 die zweite Ausgangsspannung U2 zurück, woraufhin der erste Spannungsregler 31 die erste Ausgangsspannung U1 wieder hochregelt. Beide Spannungsregler 31, 32 schwingen somit im Sinne einer "Mitkopplung" um 180° phasenverschoben. Hierdurch entsteht eine unerwünschte Asymmetrie zwischen dem ersten Ausgangsstrom I1 und dem zweiten Ausgangsstrom I2, d.h. die beiden Ausgangsströme I1, I2 sind zu einem bestimmten Zeitpunkt unterschiedlich groß.

Erfindungsgemäß ist das Stromversorgungssystem nun dazu eingerichtet, eine durch die unterschiedlichen elektrischen Bezugspotenziale G1, G2 verursachte Differenz zwischen dem ersten Ausgangsstrom I1 und dem zweiten Ausgangsstrom I2 zumindest zu verkleinern, vorzugsweise auf null zu reduzieren.

Die Verkleinerung der Differenz, vorzugsweise Reduzierung auf null, erfolgt durch eine Korrektur bei der Regelung der zweiten Ausgangsspannung U2 durch den zweiten Spannungsregler 32.

Das Stromversorgungssystem 10 ist hierzu derart eingerichtet, dass der zweite Spannungsregler 32 die zweite Ausgangsspannung U2 in Abhängigkeit von den zweiten Spannungssollwerten USP2 und von korrigierten Istwerten U2C der zweiten Ausgangsspannung U2 regelt. Die Korrektur der Istwerte der zweiten Ausgangsspannung U2 erfolgt dabei derart, dass sich die zweite Ausgangspannung U2 mit steigendem zweiten Ausgangsstrom I2 reduziert bzw. mit sich reduzierendem Ausgangsstrom I2 ansteigt.

Die Änderung der zweiten Ausgangsspannung U2 in Abhängigkeit von dem zweiten Ausgangsstrom I2 folgt dabei vorzugsweise einer (leicht) geneigten linearen Kennlinie (z.B. 100mV/20 A). Die Änderung der zweiten Ausgangsspannung U2 ist dabei von Vorteil zumindest so groß wie die Differenz zwischen den Bezugspotenzialen G1, G2, vorzugsweise zumindest so groß wie der Spannungsabfall U_{R1} + U_{R2} an den Übergangswiderständen R1 und R2.

Aus Sicht des zweiten Spannungsreglers 32 wird somit zu den Istwerten der zweiten Ausgangsspannung U2 ein Wert addiert, vorzugsweise zumindest so viel wie bei den Sollwerten USP2 über den Spannungsabfall U_{R1} + U_{R2} addiert wird. Aus der Mitkopplung wird somit eine Gegenkopplung, die nicht schwingen kann.

Die (leicht) geneigte lineare Kennlinie wird hierbei dadurch realisiert, dass ein Messignal des zweiten Stromes I2 in der Strommesseinrichtung 25 verstärkt und über eine Koppelschaltung umfassend die Widerstände R3, R4 und ein Summierglied 29 eingekoppelt wird. Das Messsignal wird hierzu einem Spannungsteiler bzw. einer Reihenschaltung der zwei ohmschen Widerstände R3, R4 zugeführt. Die an dem Widerstand R4 abfallende Spannung UR4 wird in dem Summierglied 29 zu der zweiten Ausgangsspannung U2 addiert, wodurch der korrigierte Istwert U2C der zweiten Ausgangsspannung erzeugt wird.

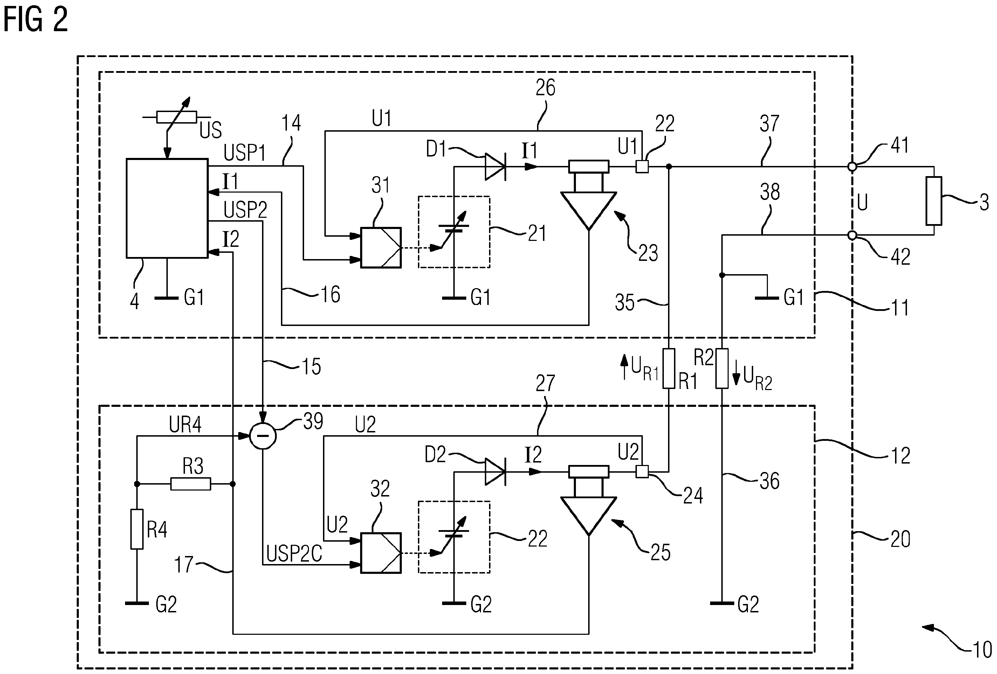

Anstatt wie in FIG 1 die zweite Ausgangsspannung U2 in Abhängigkeit von den zweiten Spannungssollwerten USP2 und von korrigierten Istwerten U2C der zweiten Ausgangsspannung U2 zu regeln, kann wie in FIG 2 dargestellt die Korrektur auch dadurch erfolgen, dass das Stromversorgungssystem 10 derart eingerichtet ist, dass der zweite Spannungsregler 32 die zweite Ausgangsspannung U2 in Abhängigkeit von korrigierten zweiten Spannungssollwerten USP2C und von (unkorrigierten) Istwerten der zweiten Ausgangsspannung U2 regelt.

Aus Sicht des zweiten Spannungsreglers 32 wird hierzu von den zweiten Spannungssollwerten USP2 ein Wert subtrahiert, vorzugsweise zumindest so viel wie über den Spannungsabfall U_{R1} + U_{R2} addiert wird. Aus der Mitkopplung wird somit eine Gegenkopplung, die nicht schwingen kann.

Die (leicht) geneigte lineare Kennlinie wird hierbei dadurch realisiert, dass ein Messignal des zweiten Stromes I2 in der Strommesseinrichtung 25 verstärkt und über die Koppelschaltung umfassend die Widerstände R3, R4 und ein Subtrahierglied 39 eingekoppelt wird. Das Messsignal wird hierzu dem Spannungsteiler bzw. der Reihenschaltung der zwei ohmschen Widerstände R3, R4 zugeführt und die an dem Widerstand R4 abfallende Spannung UR4 in dem Subtrahierglied 39 von den zweiten Spannungssollwerten USP2 subtrahiert, wodurch der korrigierte Spannungssollwert USP2C erzeugt wird.

Wenn die Steuer- und/oder Regeleinheit 4 langsamere Reaktionszeiten bei der Steuerung- und/oder Regelung wie der zweite Spannungsregler 32 hat, dann kann die Steuer- und/oder Regeleinheit 4 zusätzlich übergreifend auch dazu eingerichtet sein,
- die erste Ausgangsspannung U1 unabhängig von dem ersten Ausgangsstrom I1 auf die ersten Spannungssollwerte USP1 für die erste Ausgangsspannung U1 zu regeln, und
- die zweite Ausgangsspannung U2 durch eine Änderung der zweiten Spannungssollwerte USP2 für die zweite Ausgangsspannung derart zu regeln, dass sich die Differenz zwischen dem ersten Ausgangsstrom I1 und dem zweiten Ausgangsstrom I2 zumindest verkleinert, vorzugsweise auf null reduziert.

Die erste Ausgangsspannung U1 wird somit unabhängig von dem ersten Ausgangsstrom I1 auf einen vorgegebenen oder vorgebbaren Wert (z.B. eine Nennspannung des Stromversorgungssystems 10) geregelt und mittels der zweiten Ausgangsspannung U2 werden etwaige Differenzen zwischen den Ausgangsströmen I1, I2 verkleinert, vorzugsweise auf null reduziert. Die Ausgangsströme I1, I2 werden somit über eine Regelung der zweiten Ausgangsspannung U2 aneinander angeglichen, vorzugsweise auf eine gleiche Größe gebracht. Mit anderen Worten kommt es zu einer Ausregelung einer Differenz zwischen dem ersten Ausgangsstrom I1 und dem zweiten Ausgangsstrom I2 (ausschließlich) mit Hilfe der zweiten Ausgangsspannung U2. Die Istwerte der Ausgangsströme I1, I2 werden hierbei der Steuer- und/oder Regeleinheit 4 über die Signalleitungen 16 bzw. 17 zugeführt, die dann die zweiten Spannungssollwerte USP2 in kleinen Schritten verändert, so dass eine eventuelle Differenz der Ausgangsströme I1, I2 verkleinert, vorzugsweise auf null reduziert wird.

Wie sich herausgestellt hat, kann hierdurch übergreifend zu den unterlagerten Spannungsregelungen durch die Spannungsregler 31, 32 eine sehr gute Symmetrierung der Lastströme erreicht und dabei sichergestellt werden, dass für eine Last immer die vorgegebene oder vorgebbare (konstante) Versorgungsspannung U bereitgestellt wird.

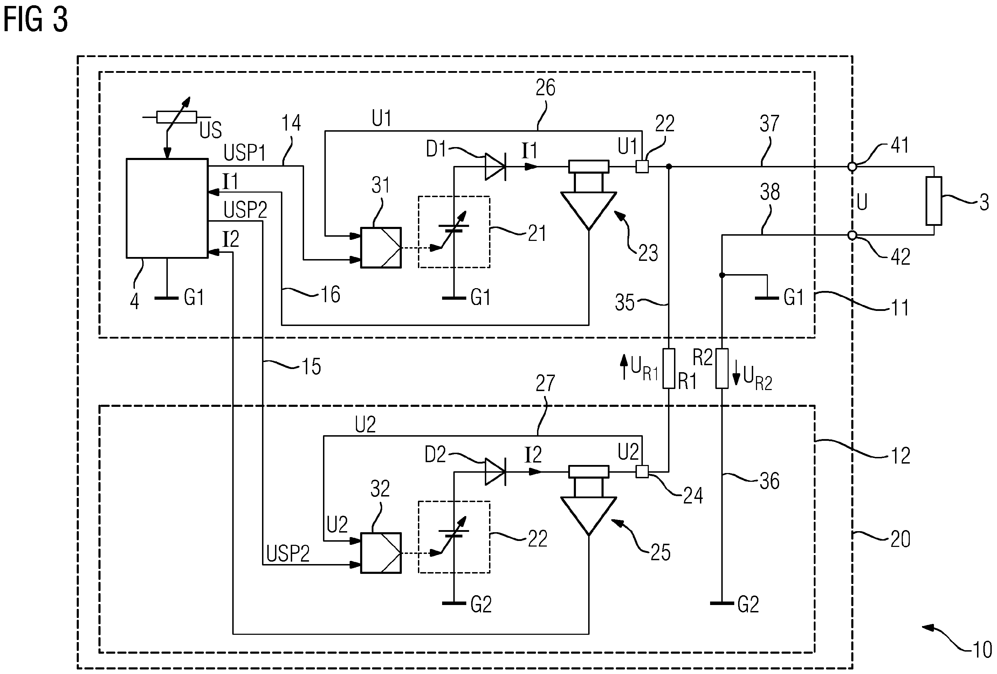

Wenn die Steuer- und/oder Regeleinheit 4 in etwa gleich schnelle oder schnellere Reaktionszeiten bei der Steuerung- und/oder Regelung wie der zweite Spannungsregler 32 hat, dann kann diese Ausgestaltung auch eine Alternative sein zu der vorstehend beschriebenen Korrektur der Istwerte der zweiten Ausgangsspannung U2 oder der Korrektur zweiten Spannungssollwerte USP2. Wie in FIG 3 dargestellt ist, kann in diesem Fall die unterlagerte schnelle Ausregelung durch den Spannungsregler 32 entfallen. Somit kann auch die Koppelschaltung umfassend die Widerstände R3, R4 und das Summierglied 29 bzw. Subtrahierglied 39 entfallen.

Bei der Last 3 kann es sich um eine einzige Last handeln. Die Last 3 kann sich aber auch aus mehreren Teillasten zusammensetzen, die beispielsweise über einen Energiebus in einer Parallelschaltung an das Stromversorgungssystem 10 angeschlossen sind.

Das Stromversorgungssystem 10 kann anstatt nur einer einzigen zweiten Stromversorgungseinheit 12 auch mehrere zweite Stromversorgungseinheiten 12 umfassen, wobei es dann eingerichtet ist, eine durch die unterschiedlichen elektrischen Bezugspotenziale verursachte Differenz zwischen dem ersten Ausgangsstrom I1 und dem jeweils zweiten Ausgangsstrom I2 jeder der zweiten Stromversorgungseinheiten 12 zumindest zu verkleinern, vorzugsweise auf null zu reduzieren.

FIG 4 zeigt einen beispielhaften konstruktiven Aufbau eines erfindungsgemäßen Stromversorgungssystems 10 mit den zwei Stromversorgungseinheiten 11, 12, die über eine Verbindungsplatine 6 miteinander verbunden sind. Jeder der Stromversorgungseinheiten 11, 12 umfasst wiederum eine eigene Platine 7, auf der die verschiedenen Komponenten befestigt bzw. elektrisch miteinander verbunden sind. Gezeigt sind auch die Anschlussklemmen 41, 42 und die elektrischen Verbindungen 35, 36. Zur Vereinfachung der Darstellung ist das Stromversorgungssystem 10 ohne das Gehäuse 20 dargestellt.

Wie ersichtlich ist, ermöglicht die Erfindung eine hohe konstruktive Flexibilität bei einem geringen schaltungs- und regelungstechnischen Aufwand für das Stromversorgungssystem und stellt dabei eine gleiche elektrische Belastung der Stromversorgungseinheiten sicher.

## Patentansprüche

1. Stromversorgungssystem (10) umfassend eine erste Stromversorgungseinheit (11), zumindest eine zweite Stromversorgungseinheit (12) und eine Steuer- und/oder Regeleinheit (4),
- wobei die erste Stromversorgungseinheit (11) und die zumindest eine zweite Stromversorgungseinheit (12) ausgangsseitig in einer Parallelschaltung zusammengeschaltet sind, um gemeinsam eine Last (3) zu speisen,
- wobei die erste Stromversorgungseinheit (11) dazu eingerichtet ist, ausgangsseitig eine erste Ausgangsspannung (U1) und einen ersten Ausgangsstrom (I1) bereitzustellen, und wobei sie einen ersten Spannungsregler (31) umfasst, der die erste Ausgangsspannung (U1) in Bezug auf ein erstes elektrisches Bezugspotenzial (G1) regelt,
- wobei die zweite Stromversorgungseinheit (12) dazu eingerichtet ist, ausgangsseitig eine zweite Ausgangsspannung (U2) und einen zweiten Ausgangsstrom (I2) bereitzustellen, und wobei sie einen zweiten Spannungsregler (32) umfasst, der die zweite Ausgangsspannung (U2) in Bezug auf ein zweites elektrisches Bezugspotenzial (G2) regelt,
- wobei die Steuer- und/oder Regeleinheit (4) erste Spannungssollwerte (USP1) für den ersten Spannungsregler (31) und zweite Spannungssollwerte (USP2) für den zweiten Spannungsregler (32) erzeugt, wobei die ersten und zweiten Spannungssollwerte (USP1, USP2) jeweils auf das erste elektrische Bezugspotenzial (G1) bezogen sind,
- wobei das erste elektrische Bezugspotenzial (G1) und das zweite elektrische Bezugspotenzial (G2) unterschiedlich sind,
- wobei das Stromversorgungssystem (10) dazu eingerichtet ist, eine durch die unterschiedlichen elektrischen Bezugspotenziale (G1, G2) verursachte Differenz zwischen dem ersten Ausgangsstrom (I1) und dem zweiten Ausgangsstrom (I2) zumindest zu verkleinern, vorzugsweise auf null zu reduzieren.

2. Stromversorgungssystem (10) nach Anspruch 1, wobei es derart eingerichtet ist, dass die Verkleinerung der Differenz, vorzugsweise Reduzierung auf null, durch eine Korrektur bei der Regelung der zweiten Ausgangsspannung (U2) durch den zweiten Spannungsregler (32) erfolgt.

3. Stromversorgungssystem (10) nach Anspruch 2, wobei es derart eingerichtet ist, dass der zweite Spannungsregler (32) die zweite Ausgangsspannung (U2) in Abhängigkeit von den zweiten Spannungssollwerten (USP2) und von korrigierten Istwerten (UC2) der zweiten Ausgangsspannung (U2) regelt.

4. Stromversorgungssystem (10) nach Anspruch 2, wobei es derart eingerichtet ist, dass der zweite Spannungsregler (32) die zweite Ausgangsspannung (U2) in Abhängigkeit von korrigierten zweiten Spannungssollwerten (USP2C) und von Istwerten der zweiten Ausgangsspannung (U2) regelt.

5. Stromversorgungssystem (10) nach Anspruch 3 oder 4, wobei eine Differenz zwischen den Bezugspotenzialen (G1, G2) abhängig ist von einer Höhe des zweiten Ausgangsstroms (I2) und wobei die Korrektur der Istwerte der zweiten Ausgangsspannung (U2) bzw. der zweiten Spannungssollwerte (USP2) derart erfolgt, dass sich die zweite Ausgangspannung (U2) mit steigendem zweiten Ausgangsstrom (I2) reduziert bzw. mit sich reduzierendem Ausgangsstrom (I2) ansteigt.

6. Stromversorgungssystem (10) nach Anspruch 5, wobei eine Änderung der zweiten Ausgangsspannung (U2) in Abhängigkeit von dem zweiten Ausgangsstrom (I2) einer geneigten linearen Kennlinie folgt.

7. Stromversorgungssystem (10) nach einem der Ansprüche 3 bis 6, wobei die Korrektur der Istwerte der zweiten Ausgangsspannung (U2) bzw. der zweiten Spannungssollwerte (USP2) zumindest so groß ist wie eine Differenz zwischen den Bezugspotenzialen (G1, G2).

8. Stromversorgungssystem (10) nach einem der vorhergehenden Ansprüche, wobei es dazu eingerichtet ist,
- die erste Ausgangsspannung (U1) unabhängig von dem ersten Ausgangsstrom (I1) auf die ersten Spannungssollwerte (USP1) für die erste Ausgangsspannung (U1) zu regeln, und
- die zweite Ausgangsspannung (U1) durch eine Änderung der zweiten Spannungssollwerte (USP2) für die zweite Ausgangsspannung (U2) derart zu regeln, dass sich die Differenz zwischen dem ersten Ausgangsstrom (i1) und dem zweiten Ausgangsstrom (I2) zumindest verkleinert, vorzugsweise auf null reduziert.

9. Stromversorgungssystem (10) nach einem der vorhergehenden Ansprüche, wobei es zumindest eine erste und eine zweite Anschlussklemme (41 bzw. 42) zum Anschluss der Last (3) umfasst, wobei die erste Stromversorgungseinheit (1) und die zweite Stromversorgungseinheit (2) ausgangsseitig in einer Parallelschaltung an die beiden Anschlussklemmen (41, 42) angeschlossen sind, um gemeinsam die Last (3) zu speisen, und wobei die zweite Anschlussklemme das erste Bezugspotenzial (G1) hat.

10. Stromversorgungssystem (10) nach einem der vorhergehenden Ansprüche, wobei elektrische Verbindungen (37, 38) von den beiden Anschlussklemmen (41, 42) zu der ersten Stromversorgungseinheit (11) kürzer sind als elektrische Verbindungen (35, 36) von den beiden Anschlussklemmen (41, 42) zu der zweiten Stromversorgungseinheit (12).

11. Stromversorgungssystem (10) nach Anspruch 9 oder 10, wobei die beiden Anschlussklemmen (41, 42) an die erste Stromversorgungseinheit (11) angeschlossen sind.

12. Verfahren zum Betrieb eines Stromversorgungssystems (10) umfassend eine erste Stromversorgungseinheit (11), zumindest eine zweite Stromversorgungseinheit (12) und eine Steuer- und/oder Regeleinheit (4),
- wobei die erste Stromversorgungseinheit (11) und die zumindest eine zweite Stromversorgungseinheit (12) ausgangsseitig in einer Parallelschaltung zusammengeschaltet sind, um gemeinsam eine Last (3) zu speisen,
- wobei die erste Stromversorgungseinheit (11) ausgangsseitig eine erste Ausgangsspannung (U1) und einen ersten Ausgangsstrom (I1) bereitstellt, und wobei sie einen ersten Spannungsregler (31) umfasst, der die erste Ausgangsspannung (U1) in Bezug auf ein erstes elektrisches Bezugspotenzial (G1) regelt,
- wobei die zweite Stromversorgungseinheit (12) ausgangsseitig eine zweite Ausgangsspannung (U2) und einen zweiten Ausgangsstrom (I2) bereitstellt, und wobei sie einen zweiten Spannungsregler (32) umfasst, der die zweite Ausgangsspannung (U2) in Bezug auf ein zweites elektrisches Bezugspotenzial (G2) regelt,
- wobei die Steuer- und/oder Regeleinheit (4) erste Spannungssollwerte (USP1) für den ersten Spannungsregler (31) und zweite Spannungssollwerte (USP2) für den zweiten Spannungsregler (32) erzeugt, wobei die ersten und zweiten Spannungssollwerte (USP1, USP2) jeweils auf das erste elektrische Bezugspotenzial (G1) bezogen sind,
- wobei das erste elektrische Bezugspotenzial (G1) und das zweite elektrische Bezugspotenzial (G2) unterschiedlich sind,
- wobei eine durch die unterschiedlichen elektrischen Bezugspotenziale (G1, G2) verursachte Differenz zwischen dem ersten Ausgangsstrom (I1) und dem zweiten Ausgangsstrom (I2) zumindest verkleinert, vorzugsweise auf null, reduziert werden.

13. Verfahren nach Anspruch 12, wobei die Verkleinerung der Differenz durch eine Korrektur bei der Regelung der zweiten Ausgangsspannung (U2) durch den zweiten Spannungsregler (32) erfolgt.

14. Verfahren nach Anspruch 13, wobei der zweite Spannungsregler (32) die zweite Ausgangsspannung (U2) in Abhängigkeit von den zweiten Spannungssollwerten (USP2) und von korrigierten Istwerten (U2C) der zweiten Ausgangsspannung (U2) regelt.

15. Verfahren nach Anspruch 13, wobei der zweite Spannungsregler (32) die zweite Ausgangsspannung (U2) in Abhängigkeit von korrigierten zweiten Spannungssollwerten (USP2C) und von Istwerten der zweiten Ausgangsspannung (U2) regelt.

16. Verfahren nach Anspruch 14 oder 15, wobei eine Differenz zwischen den Bezugspotenzialen (G1, G2) abhängig ist von einer Höhe des zweiten Ausgangsstroms (I2) und wobei die Korrektur der Istwerte der zweiten Ausgangsspannung (U2) bzw. der zweiten Spannungssollwerte (USP2) derart erfolgt, dass sich die zweite Ausgangspannung (U2) mit steigendem zweiten Ausgangsstrom (I2) reduziert bzw. mit sich reduzierendem Ausgangsstrom (I2) ansteigt.

17. Verfahren nach Anspruch 16, wobei eine Änderung der zweiten Ausgangsspannung (U2) in Abhängigkeit von dem zweiten Ausgangsstrom (I2) einer geneigten linearen Kennlinie folgt.

18. Verfahren nach einem der Ansprüche 14 bis 17, wobei eine Korrektur der Istwerte der zweiten Ausgangsspannung (U2) bzw. der zweiten Spannungssollwerte (USP2) zumindest so groß ist wie eine Differenz zwischen den Bezugspotenzialen (G1, G2).

19. Verfahren nach einem der Ansprüche 12 bis 18, wobei
- die erste Ausgangsspannung (U1) unabhängig von dem ersten Ausgangsstrom (I1) auf die ersten Spannungssollwerte (USP1) für die erste Ausgangsspannung (U1) geregelt wird, und
- die zweite Ausgangsspannung (U1) durch eine Änderung der zweiten Spannungssollwerte (USP2) für die zweite Ausgangsspannung (U2) derart geregelt wird, dass sich die Differenz zwischen dem ersten Ausgangsstrom (I1) und dem zweiten Ausgangsstrom (I2) zumindest verkleinert, vorzugsweise auf null reduziert.
